# EUROPEAN PATENT APPLICATION

(11) **EP 2 130 661 A1**
(43) Date of publication of application: **09.12.2009**
(21) Application number: 08834460.1
(22) Date of filing: 17.09.2008
(51) Int. Cl.: B29C 45/17, B29C 45/14, B29C 45/16

(54) **SIMULTANEOUS MOLDING-DECORATING APPARATUS, AND MANUFACTURING METHOD FOR SIMULTANEOUS MOLDED-DECORATED ARTICLE**

(30) Priority: 28.09.2007 JP 2007253895; 28.09.2007 JP 2007253896
(71) Applicant: NISSHA PRINTING CO., LTD., Nakagyo-ku Kyoto-shi Kyoto 604-8551 (JP)
(72) Inventor: YAMAMOTO, Terumasa, Kyoto-shi Kyoto 604-8551 (JP); YAMAZAKI, Seiichi, Kyoto-shi Kyoto 604-8551 (JP); KANBE, Toshikazu, Kyoto-shi Kyoto 604-8551 (JP); HATA, Tsukasa, Kyoto-shi Kyoto 604-8551 (JP); ASAI, Kentarou, Kyoto-shi Kyoto 604-8551 (JP); SUGIMORI, Toshikatsu, Kyoto-shi Kyoto 604-8551 (JP)
(74) Representative: HOFFMANN EITLE
(86) International application number: PCT/JP2008/066733
(87) International publication number: WO 2009/041324

(57) **Abstract**

An in-mold decorating apparatus of this invention is configured as follows. That is, in a state that a parting surface 27, on which a decorative sheet 21 is placed, is tilted relative to a platen surface 24a, a rotation shaft of a decorative sheet feed roll 2 and a rotation shaft of a guide roller 3 in a decorative sheet supply device 83 are arranged in parallel with the parting surface 27, leading to prevention of a resin molded product from being degraded in appearance due to a rip of the decorative sheet 21, a wrinkle of the decorative sheet 21, a crack of a pattern layer, and the like.

## Description

### TECHNICAL FIELD

The present invention relates to an in-mold decorating apparatus suitable for decorating a surface of a resin molded product through use of a decorative sheet. The present invention also relates to a device installation jig, a mold assembly, an injection molding machine, and a decorative sheet supply device of the in-mold decorating apparatus. The present invention also relates to a method for manufacturing an in-mold decorated molded product.

### BACKGROUND ART

As one of methods for decorating a surface of a resin molded product, conventionally, there has been known an in-mold decorating method using a decorative sheet such as a transfer material. Herein, the decorative sheet has a configuration that a transfer layer including a separation layer, a pattern layer, an adhesion layer and the like is formed on a base sheet.

The in-mold decorating method refers to the following technique. That is, in order to obtain a resin molded product, a decorative sheet is placed on a cavity in a mold assembly, molding resin is injected into the mold assembly, and the mold assembly is cooled. Simultaneously, in order to decorate a surface of the resin molded product, the decorative sheet is bonded to the surface of the resin molded product, and a base sheet of the decorative sheet is separated from the resin molded product. This in-mold decorating method has the following merit. That is, even in a case of decorating a surface of a resin molded product which can not be directly decorated by a printing method due to a shape of the resin molded product, the in-mold decorating method allows decoration of the surface of such a resin molded product.

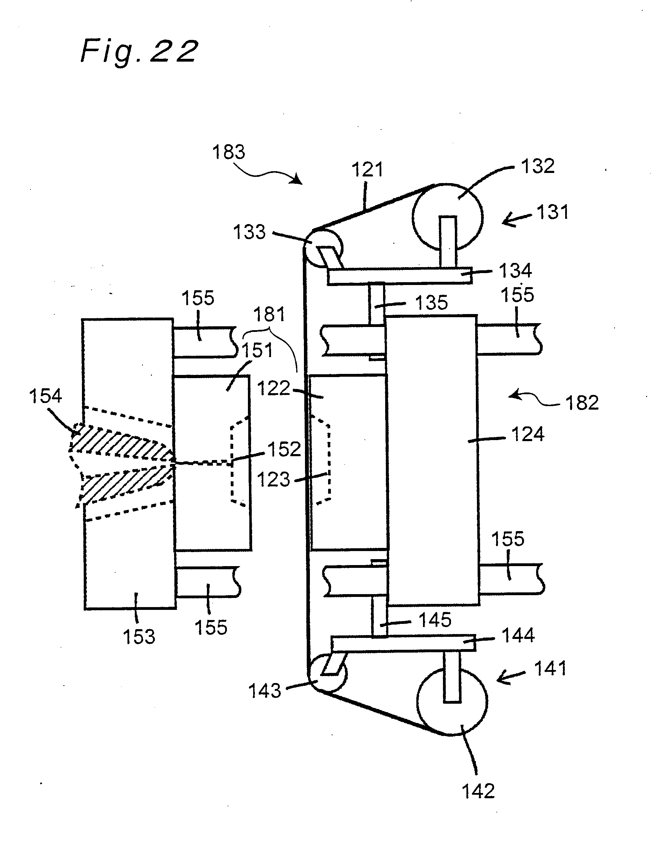

Fig. 22 shows one example of a conventional in-mold decorating apparatus that decorates a surface of a resin molded product through use of the in-mold decorating method (refer to, for example, Patent Document 1: JP 61-297149 A).

The conventional in-mold decorating apparatus shown in Fig. 22 includes a mold assembly 181, an injection molding machine 182 and a decorative sheet supply device 183.

The mold assembly 181 includes a movable mold 122 having a recessed cavity 123, and a fixed mold 151 having a recessed cavity 152.

The injection molding machine 182 includes a fixed platen 153 supporting the fixed mold 151, a movable platen 124 supporting the movable mold 122, and a plurality of tie bars 155 each extending from a platen surface (fixed mold support surface) of the fixed platen 153 to slidably penetrate through the movable platen 124. In the injection molding machine 182, the movable platen 124 slides on the tie bars 155 to move toward the fixed platen 153, so that the fixed mold 151 and the movable mold 122 are closed. In the injection molding machine 182, moreover, molding resin is injected through an injection nozzle 154 into a cavity space formed by the cavity 123 of the movable mold 122 and the cavity 152 of the fixed mold 151 in the mold closing state. Thus, a resin molded product is obtained.

The decorative sheet supply device 183 supplies a decorative sheet 121 to between the movable mold 122 and the fixed mold 151. The decorative sheet supply device 183 includes a decorative sheet feed unit 131 and a decorative sheet take-up unit 141.

The decorative sheet feed unit 131 includes a decorative sheet feed roll 132, a guide roller 133, a frame 134 and a fixing part 135. Herein, the decorative sheet feed roll 132 has a rotation shaft around which the continuous decorative sheet 121 is wound. In the decorative sheet feed unit 131, the decorative sheet feed roll 132 rotates to feed the decorative sheet 121 and the guide roller 133 guides the fed decorative sheet 121 to between the movable mold 122 and the fixed mold 151. When the decorative sheet 121 is located between the movable mold 122 and the fixed mold 151, the movable mold 122 and the fixed mold 151 are closed. In the state that the decorative sheet 121 is interposed between the movable mold 122 and the fixed mold 151, molding resin is injected into the cavity space. Thus, a resin molded product is obtained in a state that the decorative sheet 121 is bonded to a surface thereof. Thereafter, the movable mold 122 and the fixed mold 151 are opened. Then, a base sheet is separated from a transfer layer with the transfer layer being left on the surface of the resin molded product. Herein, the decorative sheet feed roll 132 and the guide roller 133 are arranged in parallel and are rotatably supported by the frame 134. The fixing part 135 is attached to the frame 134 in a direction which is parallel with a rotation shaft of the guide roller 133 and is orthogonal to a surface of the frame 134. The fixing part 135 is secured to a platen surface (movable mold support surface) of the movable platen 124 by a fastening member such as a bolt so as to be parallel with the platen surface.

In the decorative sheet take-up unit 141, a guide roller 143 guides the base sheet of the decorative sheet 121, which is separated from the transfer layer and passes between the movable mold 122 and the fixed mold 151, to a decorative sheet take-up roll 142. The decorative sheet take-up roll 142 rotates to take up the base sheet. The decorative sheet take-up roll 142 and the guide roller 143 are arranged in parallel with the decorative sheet feed roll 132 and the guide roller 133 and are rotatably supported by a frame 144. Herein, a plate-like fixing part 145 is attached to the frame 144 in a direction which is parallel with a rotation shaft of the guide roller 143 and is orthogonal to a surface of the frame 144. The fixing part 145 is secured to the platen surface of the movable platen 124 by a fastening member such as a bolt so as to be parallel with the platen surface.
Patent Document 1: JP 61-297149 A

### DISCLOSURE OF THE INVENTION

### Issue to be improved by the Invention

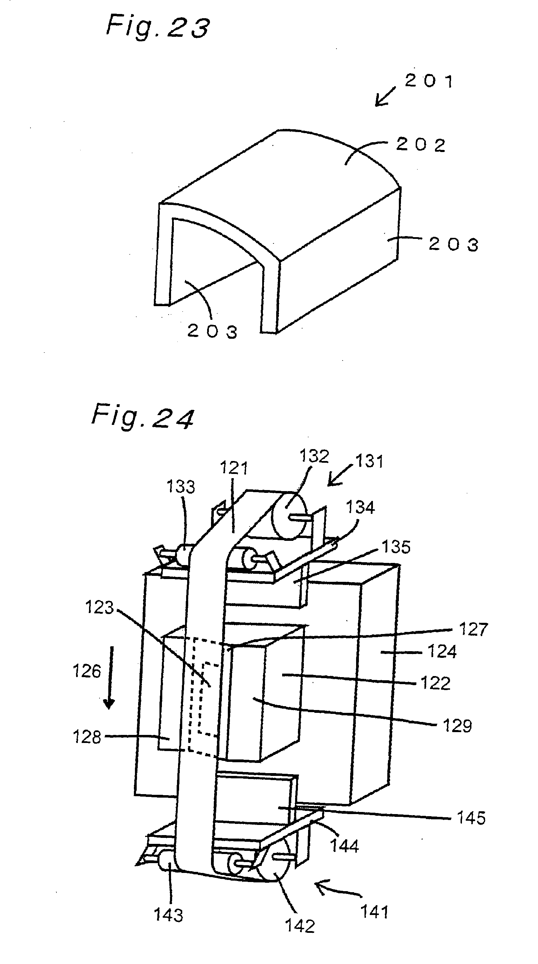

As described above, even in a case of decorating a surface of a resin molded product which can not be directly decorated by a printing method due to a shape of the resin molded product, the in-mold decorating method allows decoration of the surface of such a resin molded product. It is assumed herein that a resin molded product is a constituent component of a bumper for an automobile. As shown in Fig. 23, for example, a resin molded product 201 has a configuration that a top surface portion 202 is tilted relative to a surface orthogonal to side surfaces 203 and 203. In a case of decorating the top surface portion 202 of such a resin molded product 201, the in-mold decorating has the following issues.

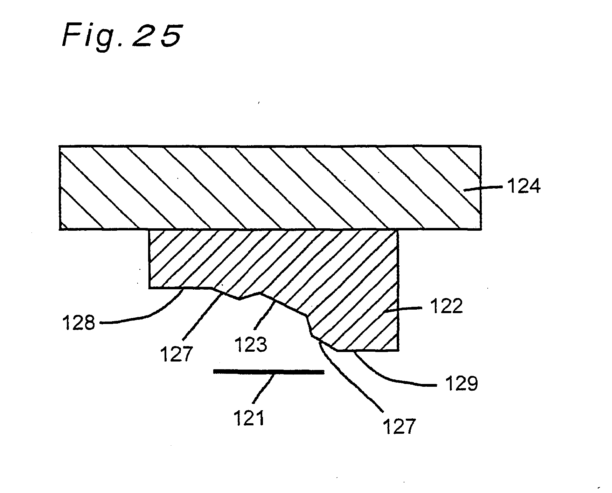

It is considered that a mold assembly shown in Figs. 24 and 25 is suitably used in the case where the top surface portion 202 of the resin molded product 201 is tilted. Specifically, a parting surface (cavity formation surface) 127, on which a decorative sheet 121 is placed when two molds are closed, is tilted relative to a platen surface of a movable platen 124 so as to fit the tilted top surface portion 202. The tilted parting surface 127, on which the decorative sheet 121 is placed, prevents deformation of the decorative sheet 121 as much as possible, leading to avoidance of deformation of a pattern layer and generation of a wrinkle in the decorative sheet. In this case, parting surfaces 128 and 129, which are provided at both sides of the parting surface 127, respectively, and on which the decorative sheet 121 is not placed in the case where the two molds are closed, are different in height from each other. Hereinafter, the state that the parting surface 127 is tilted is referred to as a mold assembly parting surface tilted state.

However, in the mold assembly parting surface tilted state, if the conventional decorative sheet supply device 183 is used, the parting surface 127 is tilted relative to a surface of the decorative sheet 121 as shown in Fig. 25 because the decorative sheet 121 is supplied in parallel with the platen surface of the movable platen 124. This causes variation in distance from the decorative sheet 121 to the parting surface 127 in a direction orthogonal to a direction in which the decorative sheet 121 is supplied. Specifically, in the direction orthogonal to the direction in which the decorative sheet 121 is supplied, a distance from a first end of the decorative sheet 121 to the parting surface 127 is longer than a distance from a second end of the decorative sheet 121 to the parting surface 127. When the movable mold 122 and the fixed mold 151 are closed in a state that the decorative sheet 121 is placed on the cavity 123, this variation in distance causes positional deviation between the decorative sheet 121, particularly, the first end which is longer in distance to the parting surface 127 and the cavity 123. Consequently, the configuration shown in Figs. 24 and 25 fails to accurately align the decorative sheet 121 with the cavity 123.

In a case of using a decorative sheet 121 having an abstract design pattern as a whole, on the other hand, there is less necessity that such a decorative sheet 121 is accurately aligned with the cavity 123. However, this case causes the following issues.

When the decorative sheet 121 is pressed by a film clamp (not shown) or when the two molds are closed, a force to be applied to the decorative sheet 121 becomes uneven due to the variation in distance between the decorative sheet 121 and the parting surface 127. Consequently, there is a possibility that the decorative sheet 121 is ripped, so that resin molded products can not be obtained in succession. Due to the rip of the decorative sheet 121, the decorative sheet 121 is wrinkled or the pattern layer is cracked. Consequently, a decorated resin molded product is degraded in appearance occasionally. The decorative sheet 121, which is not ripped at the time when the decorative sheet 121 is pressed by the film clamp or the two molds are closed, is ripped occasionally at the time when resin is injected into the mold assembly. More specifically, the decorative sheet 121 partly floats from the cavity 123 without coming into close contact with the cavity 123 due to the variation in distance. In this state, when molten resin is injected into the cavity space in the mold assembly, the decorative sheet 121 is ripped occasionally due to heat and pressure of the molten resin. Also in this case, the decorative sheet 121 is wrinkled or the pattern layer is cracked. Consequently, the decorated resin molded product is degraded in appearance occasionally.

The present invention has been devised to solve the issues described above, and an object thereof is to provide an in-mold decorating apparatus capable of preventing a decorative sheet from being ripped and wrinkled and a pattern layer from being cracked in a mold assembly parting surface tilted state. The present invention also provides a device installation jig, a mold assembly, an injection molding machine, and a decorative sheet supply device of such an in-mold decorating apparatus. The present invention also provides a method for manufacturing an in-mold decorated molded product.

### MEANS FOR IMPROVING THE ISSUES

In order to achieve the above object, the present invention has the following constitutions.

According to a first aspect of the present invention, there is provided an in-mold decorating apparatus for obtaining a resin molded product and, simultaneously, bonding a decorative sheet to a surface of the resin molded product to decorate the surface of the resin molded product,
the in-mold decorating apparatus comprising:
a mold assembly that includes a movable mold having a first cavity formation surface on which a first cavity is formed, and a fixed mold having a second cavity formation surface on which a second cavity is formed;
a decorative sheet supply device for guiding the decorative sheet in a decorative sheet supplying direction to supply the decorative sheet to between the movable mold and the fixed mold; and
an injection molding machine that includes a movable platen for supporting the movable mold at a first platen surface and a fixed platen for supporting the fixed mold at a second platen surface which faces the first platen surface to be parallel with the first platen surface, wherein the injection molding machine shifts the movable platen toward the fixed platen in a state that the decorative sheet is supplied to between the movable mold and the fixed mold, so that the decorative sheet is placed on the first or second cavity, the injection molding machine closes the movable mold and the fixed mold and then injects molten resin into a cavity space formed by the first and second cavities to obtain the resin molded product,
wherein the first and second cavity formation surfaces are tilted relative to the first or second platen surface in a direction parallel with the decorative sheet supplying direction,
wherein the decorative sheet supply device comprises:
a decorative sheet feed roll having a rotation shaft around which the decorative sheet is wound; and
a guide roller for guiding the decorative sheet fed by rotation of the decorative sheet feed roll in the decorative sheet supplying direction, wherein the guide roller has the rotation shaft arranged in parallel with a rotation shaft of the decorative sheet feed roll, and
wherein the rotation shaft of the guide roller is tilted relative to the first platen surface at an angle parallel with the first cavity formation surface.

According to a second aspect of the present invention, there is provided the in-mold decorating apparatus as defined in the first aspect,
wherein the decorative sheet supply device further comprises:
a frame for rotatably supporting the decorative sheet feed roll and the guide roller; and
a plate-like fixing part that is attached to the frame to intersect the rotation shaft of the decorative sheet feed roll in a direction parallel with the decorative sheet supplying direction, and
wherein the decorative sheet supply device is attached to the injection molding machine or the mold assembly through the fixing part.

According to a third aspect of the present invention, there is provided the in-mold decorating apparatus as defined in the second aspect,
wherein the decorative sheet supply device includes an angle adjustment mechanism for adjusting an angle of tilt of the rotation shaft of the guide roller relative to the first platen surface or the second platen.

According to a fourth aspect of the present invention, there is provided a decorative sheet supply device for use the in-mold decorating apparatus as defined in the second or third aspect.

According to a fifth aspect of the present invention, there is provided the in-mold decorating apparatus as defined in the first aspect,
wherein the decorative sheet supply device further includes:
a frame for rotatably supporting the decorative sheet feed roll and the guide roller; and
a fixing part that is attached to the frame, and
wherein the decorative sheet supply device is attached to the injection molding machine through the fixing part.

According to a sixth aspect of the present invention, there is provided the in-mold decorating apparatus as defined in the fifth aspect,
wherein the fixing part is a plate-like member attached to the frame to intersect the rotation shaft of the guide roller in a direction parallel with the decorative sheet supplying direction, and
wherein the fixing part is attached to the frame to come into surface contact with the first or second platen surface of the injection molding machine.

According to a seventh aspect of the present invention, there is provided the in-mold decorating apparatus as defined in the fifth aspect,
wherein the injection molding machine includes a tie bar that extends from the fixed platen to slidably penetrate through the movable platen, and is a device for shifting the movable platen toward the fixed platen along the tie bar, and
wherein the fixing part of the decorative sheet supply device is attached to the tie bar.

According to an eighth aspect of the present invention, there is provided the in-mold decorating apparatus as defined in the fifth aspect,
wherein the fixing part is a plate-like member attached to the frame to be parallel with the rotation shaft of the guide roller in the direction parallel with the decorative sheet supplying direction,
wherein the movable platen or the fixed platen in the injection molding machine has a tilt surface tilted relative to the first platen surface to be parallel with the first cavity formation surface, and
wherein the decorative sheet supply device is attached to the injection molding machine through the fixing part which comes into surface contact with the tilt surface.

According to a ninth aspect of the present invention, there is provided the in-mold decorating apparatus as defined in the eighth aspect, wherein the injection molding machine includes an angle adjustment mechanism for adjusting an angle of tilt of the tilt surface relative to the first or second platen surface.

According to a tenth aspect of the present invention, there is provided an injection molding machine for use in the in-mold decorating apparatus as defined in the eighth or ninth aspect.

According to an 11th aspect of the present invention, there is provided the in-mold decorating apparatus as defined in the first aspect,
wherein the decorative sheet supply device further includes:
a frame for rotatably supporting the decorative sheet feed roll and the guide roller; and
a fixing part that is attached to the frame, and wherein the decorative sheet supply device is attached to the mold assembly through.the fixing part.

According to a 12th aspect of the present invention, there is provided the in-mold decorating apparatus as defined in the 11th aspect,
wherein the fixing part is a plate-like member attached to the frame to be parallel with the rotation shaft of the decorative sheet feed roll and the rotation shaft of the guide roller,
wherein the movable mold or the fixed mold in the mold assembly has a tilt surface tilted relative to the first or second platen surface to be parallel with the first and second cavity formation surfaces, and
wherein the decorative sheet supply device is attached to the mold assembly through the fixing part which comes into surface contact with the tilt surface.

According to a 13th aspect of the present invention, there is provided the in-mold decorating apparatus as defined in the 12th aspect, wherein the mold assembly includes an angle adjustment mechanism for adjusting an angle of tilt of the tilt surface relative to the first platen surface.

According to a 14th aspect of the present invention, there is provided a mold assembly for use in the in-mold decorating apparatus as defined in the 12th or 13th aspect.

According to a 15th aspect of the present invention, there is provided the in-mold decorating apparatus as defined in the first aspect,
wherein the in-mold decorating apparatus further comprising,
a device installation jig that is used for attaching the decorative sheet supply device to the injection molding machine or the mold assembly,
wherein the decorative sheet supply device further includes:
a frame for rotatably supporting the decorative sheet feed roll and the guide roller; and
a plate-like fixing part that is attached to the frame so as to be parallel with the rotation shaft of the guide roller in the direction parallel with the decorative sheet supplying direction,
wherein the device installation jig has:
a first attaching surface that comes into surface contact with the fixing part to attach the device installation jig to the fixing part; and
a second attaching surface that comes into surface contact with the injection molding machine or the mold assembly to attach the device installation jig to the injection molding machine or the mold assembly, and
wherein an angle formed by the first attaching surface and the second attaching surface is equal to an angle of tilt of the first cavity formation surface relative to the first platen surface.

According to a 16th aspect of the present invention, there is provided the in-mold decorating apparatus as defined in the 15th aspect, wherein the device installation jig further includes an angle adjustment mechanism for adjusting the angle formed by the first attaching surface and the second attaching surface.

According to a 17th aspect of the present invention, there is provided a device installation jig for use in the in-mold decorating apparatus as defined in the 15th or 16th aspect,

According to an 18th aspect of the present invention, there is provided an in-mold decorated molded product manufacturing method for obtaining a resin molded product and, simultaneously, bonding a decorative sheet to a surface of the resin molded product to decorate the surface of the resin molded product,
the method comprising:
guiding a decorative sheet in a decorative sheet supplying direction to supply the decorative sheet to between a movable mold supported at a first platen surface of a movable platen and a fixed mold supported at a second platen surface of a fixed platen, the second platen surface facing the first platen surface to be parallel with the first platen surface;
closing the movable mold and the fixed mold in a state that the decorative sheet is supplied to between the movable mold and the fixed mold; and
injecting molten resin into a cavity space formed by a first cavity of the movable mold and a second cavity of the fixed mold,
the method comprising:
with the movable mold having a first cavity formation surface on which the first cavity is formed, the fixed mold having a second cavity formation surface on which the second cavity is formed, and the first and second cavity formation surfaces being tilted relative to the first or second platen surface in a direction parallel with the decorative sheet supplying direction,
supplying the decorative sheet between the movable mold and the fixed mold to be substantially parallel with the first cavity formation surface.

### EFFECTS OF THE INVENTION

According to the first aspect of the present invention, the first and second cavity formation surfaces in the mold assembly are tilted relative to the first or second platen surface in the direction parallel with the decorative sheet supplying direction. Moreover, the rotation shaft of the guide roller of the decorative sheet supply device is tilted relative to the first platen surface at the angle which is parallel with the first cavity formation surface. Therefore, the decorative sheet is supplied in parallel with the first cavity formation surface. That is, even in the mold assembly parting surface tilted state, the parting surface, on which the decorative sheet is placed, can be made parallel with the decorative sheet. This configuration suppresses variations in distance between the decorative sheet and the parting surface, leading to prevention of positional deviation caused at the time when the decorative sheet is placed on the cavity. Further, since the decorative sheet is readily aligned with the cavity, a resin molded product obtained by this apparatus is not degraded in appearance due to a rip or a wrinkle of the decorative sheet, a crack of the pattern layer, and the like.

### BRIEF DESCRIPTION OF THE DRAWINGS

These and other aspects and features of the present invention will become clear from the following description taken in conjunction with the preferred embodiments thereof with reference to the accompanying drawings, in which:
Fig. 1 is a side view schematically showing a configuration of an in-mold decorating apparatus according to a first embodiment of the present invention;
Fig. 2 is a perspective view showing a state that a decorative sheet supply device is attached to a movable platen in the in-mold decorating apparatus shown in Fig. 1;
Fig. 3 is a sectional view taken along a section perpendicular to a decorative sheet feeding direction in the configuration shown in Fig. 2;
Fig. 4 is a sectional view showing a configuration of a transfer sheet which is one example of a decorative sheet;
Fig. 5 is a perspective view showing a state that a decorative sheet supply device is attached to a movable platen in a second embodiment of the present invention;
Fig. 6A is a perspective view showing a state that a decorative sheet supply device is attached to a movable platen in a third embodiment of the present invention;
Fig. 6B is a perspective view showing a state that the decorative sheet is further fed as compared with the state shown in Fig. 6A;
Fig. 7 is a perspective view showing a state that a device installation jig is attached to a decorative sheet supply device and a movable platen in a fourth embodiment of the present invention;
Fig. 8 is a perspective view showing a configuration of the device installation jig shown in Fig. 7;
Fig. 9 is a perspective view showing a first modified example of the device installation jig shown in Fig. 8;
Fig. 10 is a perspective view showing a second modified example of the device installation jig shown in Fig. 8;
Fig. 11 is a perspective view showing a third modified example of the device installation jig shown in Fig. 8;
Fig. 12 is a perspective view showing a fourth modified example of the device installation jig shown in Fig. 8;
Fig. 13 is a perspective view showing a state that a device installation jig, which is a fifth modified example of the device installation jig shown in Fig. 8, is attached to the decorative sheet supply device and a mold assembly;
Fig. 14 is a perspective view showing a fifth modified example of the device installation jig shown in Fig. 8;
Fig. 15 is a perspective view showing a sixth modified example of the device installation jig shown in Fig. 8;
Fig. 16A is a perspective view showing a state that the device installation jig is attached to a decorative sheet supply device, which is different from that shown in Fig. 7, and the movable platen, in the fourth embodiment of the present invention;
Fig. 16B is a perspective view showing a state that the decorative sheet is further fed as compared with the state shown in Fig. 16A;
Fig. 17 is a perspective view showing a state that a decorative sheet supply device is attached to a mold assembly in a fifth embodiment of the present invention;
Fig. 18 is a perspective view showing the mold assembly shown in Fig. 17;
Fig. 19 is a perspective view showing a modified example of the mold assembly shown in Fig. 17;
Fig. 20 is a perspective view showing a movable platen including a fixing part for securing the decorative sheet supply device;
Fig. 21 is a side view schematically showing a configuration of an in-mold decorating apparatus according to a modified embodiment of the present invention;
Fig. 22 is a side view schematically showing a configuration of a conventional in-mold decorating apparatus;
Fig. 23 is a perspective view showing a resin molded product having a tilted top surface portion;
Fig. 24 is a perspective view showing a state that a decorative sheet supply device is attached to a movable platen in the conventional in-mold decorating apparatus shown in Fig. 22; and
Fig. 25 is a sectional view taken along a section perpendicular to a decorative sheet feeding direction in the configuration shown in Fig. 24.

### BEST MODE FOR CARRYING OUT THE INVENTION

Before the description of the present invention proceeds, it is to be noted that like parts are designated by like reference numerals throughout the accompanying drawings.

With reference to the drawings, hereinafter, detailed description will be given of preferred embodiments of the present invention.

### «First Embodiment»

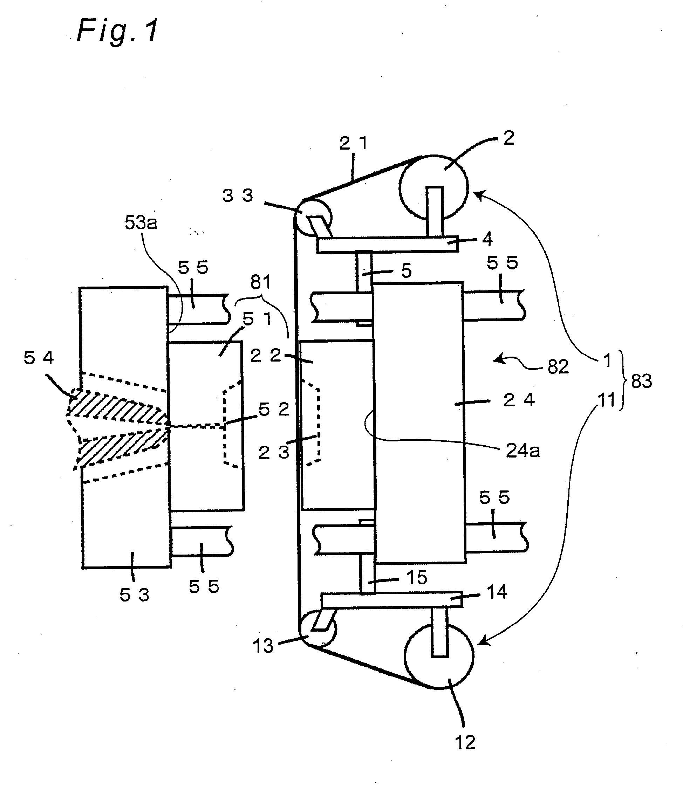

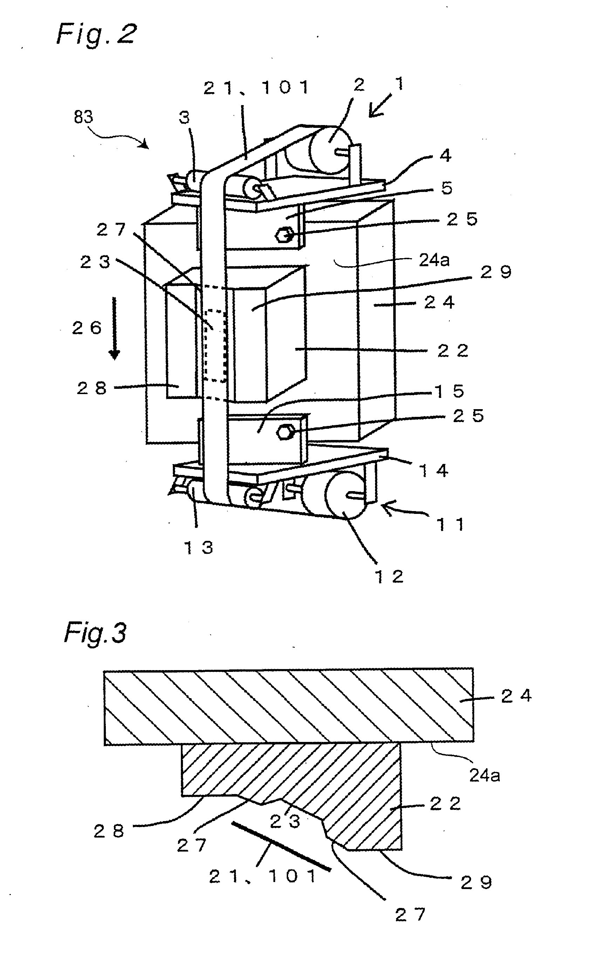

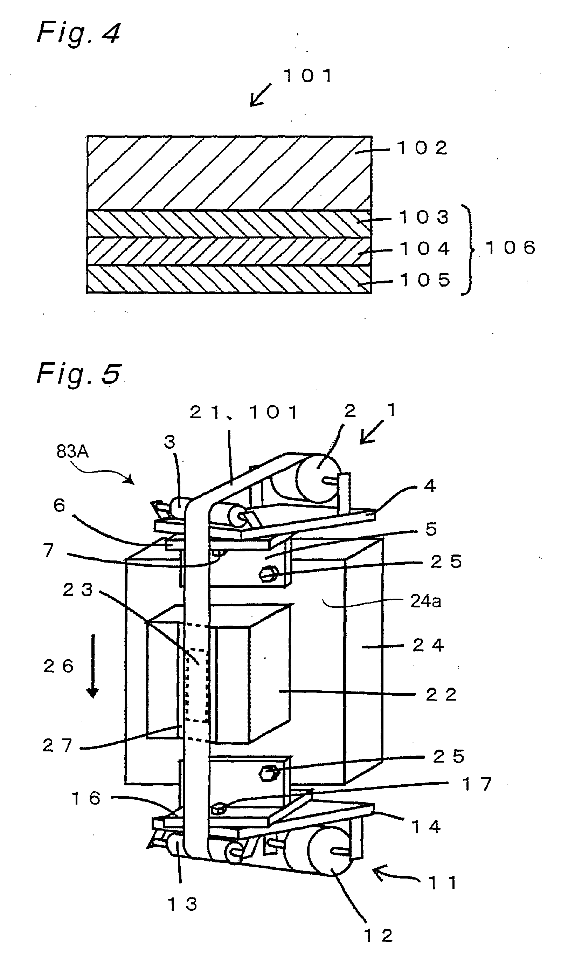

With reference to Figs. 1 to 4, description will be given of an in-mold decorating apparatus according to a first embodiment of the present invention. Fig. 1 is a side view schematically showing a configuration of the in-mold decorating apparatus according to the first embodiment. Fig. 2 is a perspective view showing a state that a decorative sheet supply device is attached to a movable platen in the first embodiment. Fig. 3 is a sectional view taken along a section perpendicular to a decorative sheet feeding direction in the configuration shown in Fig. 2. Fig. 4 is a sectional view showing a configuration of a transfer sheet which is one example of a decorative sheet for use in the in-mold decorating apparatus shown in Fig. 1.

As shown in Fig. 1, the in-mold decorating apparatus according to the first embodiment includes a mold assembly 81, an injection molding machine 82, and a decorative sheet supply device 83.

The mold assembly 81 includes a movable mold 22 and a fixed mold 51. Herein, the movable mold 22 has a parting surface (first cavity formation surface) 27 on which a recessed cavity (first cavity) 23 is formed. On the other hand, the fixed mold 51 has a parting surface (second cavity formation surface) on which a recessed cavity (second cavity) 52 is formed. As shown in Figs. 2 and 3, the movable mold 22 is secured to a movable platen 24 of the injection molding machine 82. The parting surface 27 of the movable mold 22 is a surface on which a decorative sheet 21 is placed in a case where the mold assembly 81 is closed. As shown in Fig. 3, the parting surface 27 is tilted relative to a platen surface (movable mold support surface: first platen surface) 24a of the movable platen 24. An angle of tilt of the parting surface 27 corresponds to an angle of tilt of a top surface portion of a resin molded product to be obtained. The movable mold 22 also has parting surfaces 28 and 29 which are located at both sides of the parting surface 27, respectively, and on which the decorative sheet 21 is not placed in the case where the mold assembly 81 is closed. As shown in Fig. 3, the parting surfaces 28 and 29 are formed so as to be different in height from each other. Hereinafter, the state that the parting surface 27 is tilted will be referred to as a mold assembly parting surface tilted state. Herein, the fixed mold 51 has a shape corresponding to the movable mold 22 such that no clearance is created between the fixed mold 51 and the movable mold 22 in the case where the fixed mold 51 and the movable mold 22 are closed.

Herein, the mold assembly 81 may include accessory members such as an intermediate plate, a molded-product pushing plate and a sheet clamp. Moreover, the decorative sheet 21 may be placed on either the fixed mold 51 or the movable mold 22. Herein, description will be given of a case where the decorative sheet 21 is placed on the movable mold 22; however, similar functional effects can be attained even in a case where the decorative sheet 21 is placed on the fixed mold 51 unless otherwise specified.

The injection molding machine 82 includes the movable platen 24, a fixed platen 53, and a plurality of tie bars 55. Herein, the movable platen 24 supports the movable mold 22 at the platen surface 24a. The fixed platen 53 supports the fixed mold 51 at a platen surface (fixed mold support surface: second platen surface) 53a which is parallel with and faces the platen surface 24a. The plurality of tie bars 55 extend from the platen surface 53a of the fixed platen 53 and slidably penetrate through the movable platen 24. In the injection molding machine 82, the movable platen 24 slides on the tie bars 55 to move toward the fixed platen 53, so that the fixed mold 51 and the movable mold 22 are closed. In the injection molding machine 82, moreover, molding resin is injected through an injection nozzle 54 into a cavity space formed by the cavity 23 of the movable mold 22 and the cavity 52 of the fixed mold 51 in the mold closing state. Thus, a resin molded product can be obtained.

The decorative sheet supply device 83 guides the decorative sheet 21 in a decorative sheet supplying direction 26 to supply the decorative sheet 21 to between the movable mold 22 and the fixed mold 51. The decorative sheet 21 has a configuration that a transfer layer including a separation layer, a pattern layer, an adhesion layer, and the like is formed on a base sheet. The decorative sheet supply device 83 includes a decorative sheet feed unit 1, and a decorative sheet take-up unit 11 which is one example of a decorative sheet in-mold introduction unit.

The decorative sheet feed unit 1 includes a decorative sheet feed roll 2, a guide roller 3, a frame 4, and a fixing part 5. Herein, the decorative sheet feed roll 2 has a rotation shaft around which the continuous decorative sheet 21 is wound. In the decorative sheet feed unit 1, the decorative sheet feed roll 22 rotates to feed the decorative sheet 21, and the guide roller 3 guides the fed decorative sheet 21 in the decorative sheet supplying direction 26.

The guide roller 3 has a rotation shaft which is arranged in parallel with the rotation shaft of the decorative sheet feed roll 2. When the movable mold 22 and the fixed mold 51 are closed, the decorative sheet 21 located between the movable mold 22 and the fixed mold 51 is bonded to a surface of the resin molded product in the cavity space. Thereafter, the base sheet is separated from the transfer layer with the transfer layer being left on the surface of the resin molded product. The decorative sheet feed roll 2 and the guide roller 3 are rotatably supported by the frame 4 such that the respective rotation shafts are arranged in parallel with the parting surface 27.

The plate-like fixing part 5 is attached to the frame 4 so as to be parallel with the platen surface 24a of the movable platen 24. That is, the fixing part 5 is secured to the frame 4 in a direction which is parallel with the decorative sheet supplying direction 26 and is orthogonal to the rotation shaft of the decorative sheet feed roll. The fixing part 5 is a member for supporting the frame 4 and securing a counterpart on which the decorative sheet feed unit 1 is disposed. The fixing part 5 is secured to the platen surface 24a of the movable platen 24 by a bolt 25 which is one example of a fastening member. Herein, a member for securing the fixing part 5 to the platen surface 24a is not limited to the bolt 25. However, use of the bolt 25 has a merit of readily and firmly securing the fixing part 5 to the platen surface 24a.

The decorative sheet take-up unit 11 includes a decorative sheet take-up roll 12, a guide roller 13, a frame 14, and a fixing part 15. In the decorative sheet take-up unit 11, when the base sheet of the decorative sheet 21 is separated from the transfer layer and passes between the movable mold 22 and the fixed mold 51, the guide roller 13 guides the base sheet to the decorative sheet take-up roll 12 and the decorative sheet take-up roll 12 rotates to take up the base sheet. The decorative sheet take-up roll 12 and the guide roller 13 are arranged in parallel with the parting surface 27 and are rotatably supported by the frame 14. The fixing part 15 is attached to the frame 14 so as to be parallel with the platen surface 24a of the movable platen 24. The fixing part 15 is secured to the platen surface 24a of the movable platen 24 by a bolt 25 which is one example of a fastening member.

Preferably, the rotation shafts of the decorative sheet feed roll 2 and the decorative sheet take-up roll 12, the guide rollers 3 and 13, the frames 4 and 14, and the fixing parts 5 and 15 are made of metal in order to enhance durability. Also preferably, each of the decorative sheet feed unit 1 and the decorative sheet take-up unit 11 further includes a frame drive means (not shown) or a control means (not shown) for setting a position of the decorative sheet 21 in a lateral direction (width direction).

Herein, each of the fixing parts 5 and 15 is secured to the platen surface 24a of the movable platen 24. Alternatively, each of the fixing parts 5 and 15 may be secured to the platen surface 53a of the fixed platen 53. When one of the movable mold 22 and the fixed mold 51, on which the decorative sheet 21 is to be placed, is determined, one of the movable platen 24 and the fixed platen 53, to which each of the fixing parts 5 and 15 is secured, is determined.

Next, description will be given of operations of the in-mold decorating apparatus according to the first embodiment of the present invention. Herein, description will be given of a case where a transfer sheet 101 shown in Fig. 4 is used as the decorative sheet 21.

The transfer sheet 101 has a configuration that a transfer layer 106 including a separation layer 103, a pattern layer 104, an adhesion layer 105, and the like is formed on a base sheet 102. Herein, the transfer layer 106, which is excellent in separability, may be directly formed on the base sheet 102. On the other hand, the transfer layer 106, which is poor in separability, may be formed on the base sheet 102 with a release layer (not shown) for improving the separability being entirely interposed therebetween. The pattern layer 104 may be formed on the separation layer 103 in a form of a print layer, a metal thin film layer, or the like. If the pattern layer 104 is a metal thin film layer, an anchor layer (not shown) may be formed between another transfer layer and the metal thin film layer in order to suitably bring the two layers into close contact with each other. The adhesion layer 105 is a layer for bonding the respective layers onto a surface of a resin molded product.

First, the decorative sheet feed roll 2 rotates to feed the transfer sheet 101. Herein, the decorative sheet feed unit 1 does not necessarily include a drive source for rotating the decorative sheet feed roll 2. For example, the decorative sheet take-up unit 11 may include such a drive source. That is, the decorative sheet feed roll 2 may be driven by a mechanical force for driving the decorative sheet take-up roll 12. In a case where a drive source for rotating the decorative sheet feed roll 2 and a drive source for rotating the decorative sheet take-up roll 12 are provided separately, preferably, the two drive sources are actuated in synchronization with each other so as to make a tensile force to be applied to the transfer sheet 101 constant.

Next, the guide roller 3 guides the transfer sheet 101, which is fed by the decorative sheet feed roll 2, in the decorative sheet supplying direction 26 to supply the transfer sheet 101 to between the movable mold 22 and the fixed mold 51. Herein, the transfer sheet 101 is intermittently supplied into the mold assembly 81 such that a pattern (not shown) formed on the transfer sheet 101 is placed at a predetermined position relative to the cavity 23. Herein, each of the decorative sheet feed roll 2, the decorative sheet take-up roll 12, the guide roller 3, and the guide roller 13 is provided in parallel with the parting surface 27. As shown in Fig. 3, therefore, the transfer sheet 101 is supplied in parallel with the parting surface 27. Accordingly, there is no deviation in distance between the transfer sheet 101 and the surface of the cavity 23. For example, this distance can be set within an approximate range from 2 to 3 mm. As a result, there hardly occurs positional deviation between the transfer sheet 101 and the surface of the cavity 23. That is, the transfer sheet 101 is readily aligned with the surface of the cavity 23.

After completion of the alignment for the transfer sheet 101, the transfer sheet 101 is brought into close contact with the movable mold 22. Preferably, a sheet clamp (not shown) may be used for bringing the transfer sheet 101 into close contact with the mold assembly 81. Alternatively, the mold assembly 81 may be provided with a suction hole (not shown) for sucking the transfer sheet 101. Still alternatively, the transfer sheet 101 may be softened by heat when being brought into close contact with the mold assembly 81. In this case, preferably, an electrothermal heater (not shown) capable of generating heat at a temperature in an approximate range from 80 to 300°C may be provided as a heating means. The temperature of heat generated by the heating means may be set appropriately depending on a type of a decorative sheet 21 to be used herein. For example, an insert sheet may be used as the decorative sheet 21. In the case of using the insert sheet, preferably, the temperature is set within an approximate range from 100 to 500°C.

When the transfer sheet 101 is brought into close contact with the movable mold 22, then, the fixed mold 51 and the movable mold 22 are closed. Thereafter, molding resin is injected from a gate of the fixed mold 51 into the cavity space in the mold assembly 81 such that the cavity space is filled with the molding resin. Thus, a resin molded product is obtained. Simultaneously, the transfer sheet 101 is bonded to a surface of the resin molded product.

Herein, examples of the molding resin may include general resin such as polystyrene-based resin, polyolefin-based resin, ABS resin, AS resin, and AN resin. Examples of the molding resin may also include: general engineering resin such as polyphenylene oxide/polystyrene-based resin, polycarbonate-based resin, polyacetal-based resin, acryl-based resin, polycarbonate-modified polyphenylene ether resin, polybutylene terephthalete resin, and ultra high molecular weight polyethylene resin; and super-engineering resin such as polysulfone resin, polyphenylene sulfide-based resin, polyphenylene oxide-based resin, polyarylate resin, polyetherimide resin, polyimide resin, liquid crystal polyester resin, and polyallyl-based heat resistant resin.

The resin molded product obtained as described above is cooled. Thereafter, the mold assembly 81 is opened, the base sheet 102 of the transfer sheet 101 is separated from the resin molded product, and the resin molded product is taken out of the mold assembly 81.

Thus, there is obtained an in-mold decorated molded product having a configuration that the transfer layer is transferred onto the surface of the resin molded product.

The guide roller 13 guides, to the decorative sheet take-up roll 12, the transfer sheet 101 from which the base sheet 102 is separated. Then, the decorative sheet take-up roll 12 rotates to take up the base sheet 102.

As described above, the in-mold decorating apparatus according to the first embodiment of the present invention is configured to supply the decorative sheet 21 in the direction parallel with the parting surface 27. As a result, the decorative sheet 21 is readily aligned with the cavity 23. Therefore, a resin molded product obtained by the in-mold decorating apparatus is not degraded in appearance due to a rip of the decorative sheet 21, a wrinkle of the decorative sheet 21, a crack of the pattern layer 104, or the like.

### «Second Embodiment»

With reference to Fig. 5, next, description will be given of an in-mold decorating apparatus according to a second embodiment of the present invention. Fig. 5 is a perspective view showing a state that a decorative sheet supply device is attached to a movable platen in the second embodiment of the present invention. The in-mold decorating apparatus according to the second embodiment is different from the in-mold decorating apparatus according to the first embodiment in the following point. In the first embodiment, the fixing part 5 is secured to the frame 4 and the fixing part 15 is secured to the frame 14. In the second embodiment, on the other hand, a turn table 6 is interposed between a fixing part 5 and a frame 4, and a turn table 16 is interposed between a fixing part 15 and a frame 14. The frame 4 is secured to the turn table 6 by a fixing screw which is one example of a fixing means, and the frame 14 is secured to the turn table 16 by a fixing screw 17 which is one example of a fixing means. The in-mold decorating apparatus according to the second embodiment is similar to that according to the first embodiment except the point described above. Therefore, the repetitive description thereof will not be given here, but description will be mainly given of the point of difference.

In the second embodiment, as shown in Fig. 5, the fixing part 5 is secured to the turn table 6, and the fixing part 15 is secured to the turn table 16. The turn table 6 is arranged in parallel with the frame 4, and the turn table 16 is arranged in parallel with the frame 14. Accordingly, the frames 4 and 14 on the turn tables 6 and 16 rotate about an axis in the decorative sheet feeding direction 26, respectively, in order to adjust an angle of each of a decorative sheet feed roll 2, a decorative sheet take-up roll 12, a guide roller 3, and a guide roller 13 relative to a platen surface 24a of a movable platen 24. In other words, this rotation allows adjustment of an angle of a decorative sheet 22 relative to the platen surface 24a of the movable platen 24. When the decorative sheet 22 is adjusted at a desired angle, that is, when the decorative sheet 22 is adjusted so as to be parallel with a surface of a cavity 23 and a parting surface 27, then, the frame 4 is secured to the turn table 6 by the fixing means such as the fixing screw 7 so as not to rotate on the turn table 6 and the frame 14 is secured to the turn table 16 by the fixing means such as the fixing screw 17 so as not to rotate on the turn table 16. In the second embodiment, the turn table 6, the turn table 16, the fixing screw 7, and the fixing screw 17 form an angle adjustment mechanism that rotates the decorative sheet 21 about the axis in the decorative sheet feeding direction 26.

According to the second embodiment, as described above, the decorative sheet 21 can rotate about the axis in the decorative sheet feeding direction 26. Even in a case where the parting surface 27 varies in angle of tilt depending on a type of a mold assembly 81 to be used herein, therefore, the decorative sheet 21 can be made parallel with the parting surface 27. Accordingly, use of one decorative sheet supply device 83A allows use of plural types of mold assemblies, which is economically advantageous.

### «Third Embodiment»

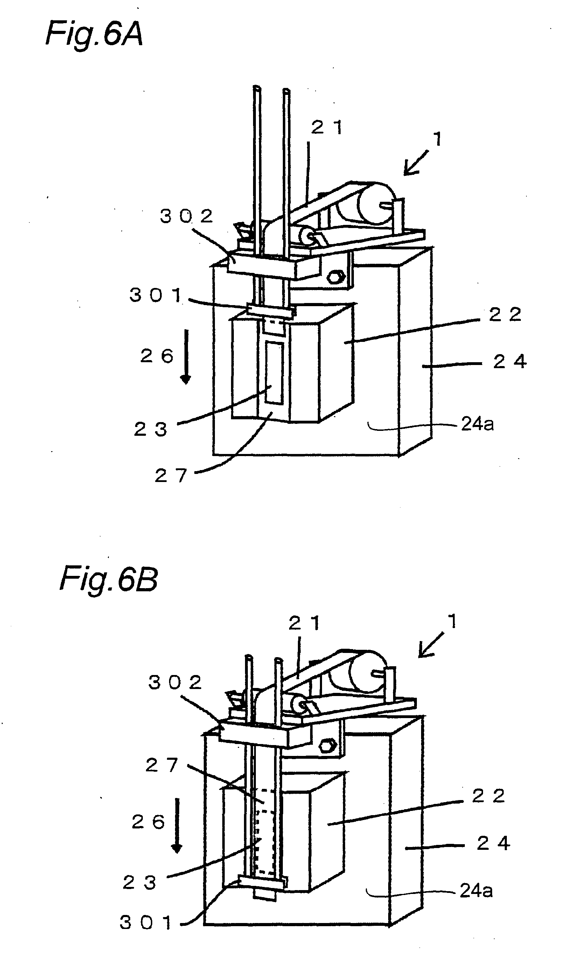

With reference to Figs. 6A and 6B, next, description will be given of an in-mold decorating apparatus according to a third embodiment of the present invention. Figs. 6A and 6B are perspective views each showing a state that a decorative sheet supply device is attached to a movable platen in the third embodiment of the present invention. The in-mold decorating apparatus according to the third embodiment is different from the in-mold decorating apparatus according to the first embodiment in the following point. In the third embodiment, an insert sheet is used as the decorative sheet 21, and a pinch unit 301 and a drive unit 302 are provided in place of the decorative sheet take-up unit 11. The in-mold decorating apparatus according to the third embodiment is similar to that according to the first embodiment except the point described above. Therefore, the repetitive description thereof will not be given here, but description will be mainly given of the point of difference.

The insert sheet is different from the transfer sheet 101 in a point that it has no layer like the separation layer 103. That is, in a case where the base sheet 102 is not separated from the transfer layer 106 bonded to the resin molded product, such an insert sheet is used in place of the transfer sheet 101. Herein, the insert sheet must be punched in a mold assembly in order to take up a portion other than a portion, which is laminated on a resin molded product, in the insert sheet. Herein, in a case where the portion other than the portion, which is laminated on the resin molded product, in the insert sheet is cut together with the resin molded product without being taken up, the decorative sheet take-up unit 11 can not be used as a decorative sheet in-mold introduction unit. In the third embodiment, therefore, the pinch unit 301 and the drive unit 302 are used as such a decorative sheet in-mold introduction unit. The pinch unit 301 grasps the cut end of the insert sheet, and the drive unit 302 allows the pinch unit 301 to move vertically (that is, to move in the decorative sheet supplying direction 26).

According to the third embodiment, as described above, the use of the pinch unit 301 and the drive unit 302 eliminates the necessity of the decorative sheet take-up unit 11.

### «Fourth Embodiment»

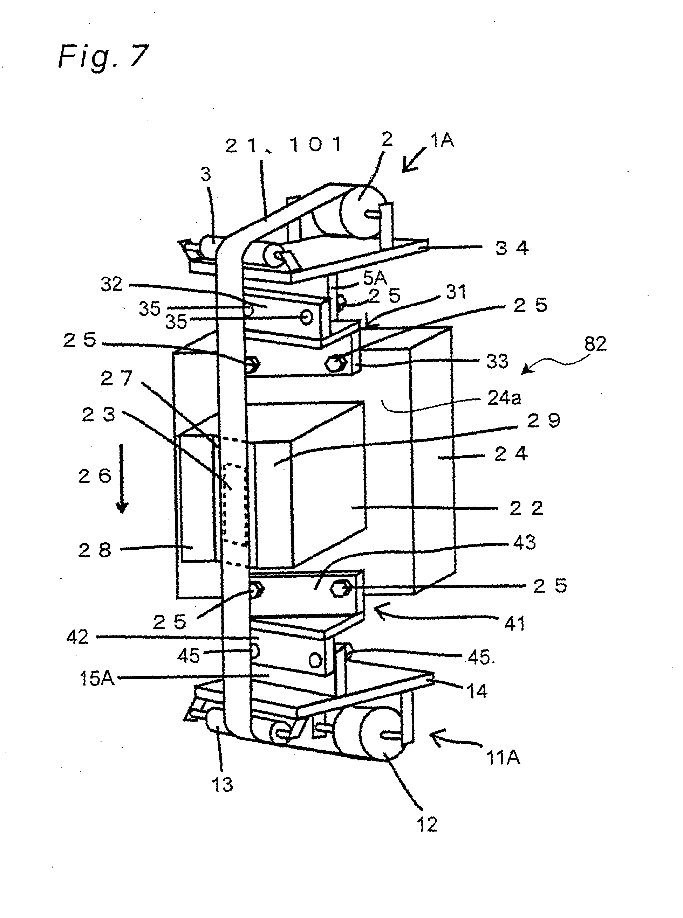

With reference to Fig. 7, next, description will be given of an in-mold decorating apparatus according to a fourth embodiment of the present invention. Fig. 7 is a perspective view showing a state that a decorative sheet supply device is attached to a movable platen in the fourth embodiment of the present invention. The in-mold decorating apparatus according to the fourth embodiment is different from the in-mold decorating apparatus according to the first embodiment in the following point. That is, in the first embodiment, the decorative sheet supply device 83 is directly attached to the movable platen 24. In the fourth embodiment, on the other hand, a decorative sheet supply device 83 is attached to a movable platen 24 through device installation jigs 31 and 41. The in-mold decorating apparatus according to the fourth embodiment is similar to that according to the first embodiment except the point described above. Therefore, the repetitive description thereof will not be given here, but description will be mainly given of the point of difference.

In the fourth embodiment, a fixing part 5A of a decorative sheet feed unit 1A and a fixing part 15A of a decorative sheet take-up unit 11A are arranged so as to be parallel with a rotation shaft of a decorative sheet feed roll 2, rotation shafts of guide rollers 3 and 13, a rotation shaft of a decorative sheet take-up roll 12, and a decorative sheet supplying direction 26, as in a case of a conventional in-mold decorating apparatus.

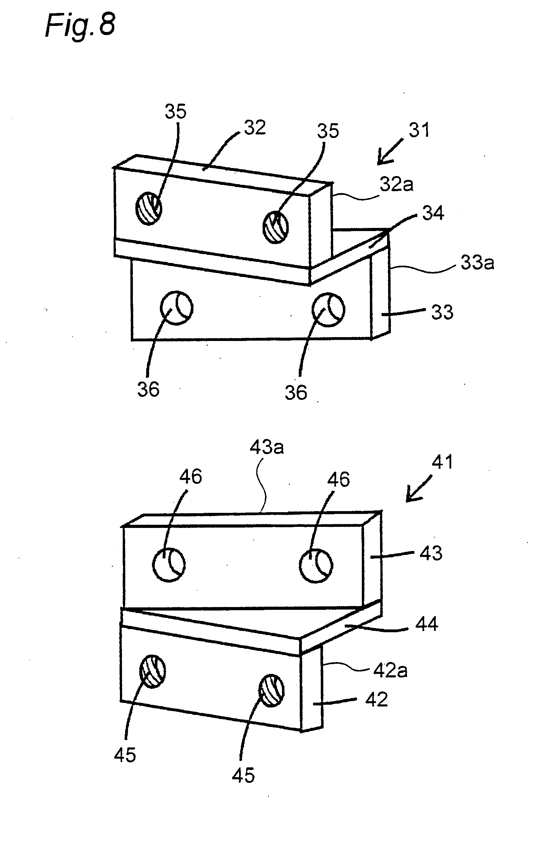

Fig. 8 is a perspective view showing the device installation jigs 31 and 41. The device installation jig 31 includes a plate-like first fixing part 32, a plate-like second fixing part 33, and a plate-like supporting part 34. The first fixing part 32 has a first attaching surface 32a with which the fixing part 5A comes into face contact for attachment. The second fixing part 33 has a second attaching surface 33a with which the movable platen 24 comes into face contact for attachment. The supporting part 34 fixedly supports the first fixing part 32 and the second fixing part 33. The first fixing part 32 and the second fixing part 33 are attached to the supporting part 34 such that an angle formed by the first attaching surface 32a and the second attaching surface 33a is equal to an angle of tilt of a parting surface 27 relative to a platen surface 24a. The supporting part 34 keeps a positional relation between the first fixing part 32 and the second fixing part 33, and bears a weight of the decorative sheet feed unit 1A. Preferably, each of the first fixing part 32, the second fixing part 33, and the supporting part 34 is made of metal such as iron in order to enhance strength.

The device installation jig 41 includes a plate-like first fixing part 42, a plate-like second fixing part 43, and a plate-like supporting part 44. The first fixing part 42 has a first attaching surface 42a with which the fixing part 15A comes into face contact for attachment. The second fixing part 43 has a second attaching surface 43a with which the movable platen 24 comes into face contact for attachment. The supporting part 44 fixedly supports the first fixing part 42 and the second fixing part 43. The first fixing part 42 and the second fixing part 43 are attached to the supporting part 44 such that an angle formed by the first attaching surface 42a and the second attaching surface 43a is equal to the angle of tilt of the parting surface 27 relative to the platen surface 24a. The supporting part 44 keeps a positional relation between the first fixing part 42 and the second fixing part 43, and bears a weight of the decorative sheet take-up unit 11A. Preferably, each of the first fixing part 42, the second fixing part 43, and the supporting part 44 is made of metal such as iron in order to enhance strength.

In addition to the first fixing parts 32 and 42, the second fixing parts 33 and 33, and the supporting parts 34 and 44, reinforcing parts (not shown) may be additionally provided to the device installation jigs 31 and 41, respectively, in order to enhance the strength of the respective jigs.

In the fourth embodiment, the device installation jigs 31 and 41 are attached to the movable platen 24. Of course, the device installation jigs 31 and 41 may be attached to a fixed platen 53. When one of a movable mold 22 and a fixed mold, on which a decorative sheet 21 is to be placed, is determined, one of the movable platen 24 and the fixed platen 53, to which each of the device installation jigs 31 and 41 is secured, is determined.

A method of securing the device installation jigs 31 and 41 is not particularly limited herein. However, the device installation jigs 31 and 41 can be secured readily and firmly through use of bolts 25, for example. As shown in Fig. 8, therefore, a bolt hole 35 and a bolt through hole 26 are formed on the device installation jig 31, and a bolt hole 45 and a bolt through hole 46 are formed on the device installation jig 41.

The decorative sheet feed unit 1A can be secured to the device installation jig 31 in such a manner that the bolt 25 is screwed into the bolt hole 35 of the first fixing part 33 through a bolt through hole (not shown) formed on the fixing part 5A. The device installation jig 31 can be secured to the movable platen 24 in such a manner that the bolt 25 is screwed into a bolt hole (not shown) formed on the platen surface 24a through the bolt through hole 36 of the second fixing part 34. Likewise, the decorative sheet take-up unit 11A can be secured to the device installation jig 41 in such a manner that the bolt 25 is screwed into the bolt hole 45 of the first fixing part 43 through a bolt through hole (not shown) formed on the fixing part 15A. The device installation jig 41 can be secured to the movable platen 24 in such a manner that the bolt 25 is screwed into a bolt hole (not shown) formed on the platen surface 24a through the bolt through hole 46 of the second fixing part 44.

Preferably, each of the bolt through holes 36 and 46 is formed so as to be slightly larger in diameter than each of the bolts 25. Also preferably, each of the bolt holes 35 and 45 has a tap groove formed in accordance with the bolt 25 to be used herein. Alternatively, bolt through holes may be formed in place of the bolts 35 and 45. Thus, the decorative sheet feed unit 1A may be secured to the device installation jig 31 by bolts and nuts, and the decorative sheet take-up unit 11A may be secured to the device installation jig 41 by bolts and nuts.

According to the fourth embodiment, as described above, the decorative sheet feed unit 1A is attached to the movable platen 24 through the device installation jig 31 and the decorative sheet take-up unit 11A is attached to the movable platen 24 through the device installation jig 41. Therefore, the decorative sheet 21 can be made parallel with the parting surface 27 only by the configurations of the device installation jigs 31 and 41. In other words, the configurations of the decorative sheet feed unit 1A, decorative sheet take-up unit 11A, and injection molding machine 82 can be made equal to those of the conventional decorative sheet feed unit 131, decorative sheet take-up unit 141, and injection molding machine 182. In an already-existing in-mold decorating apparatus having a conventional configuration, accordingly, the decorative sheet 21 can be made parallel with the parting surface 27 only by provision of the device installation jigs 31 and 41. As a result, the decorative sheet 21 is readily aligned with the cavity 23, leading to prevention of a resin molded product from being degraded in appearance due to a rip of the decorative sheet 21, a wrinkle of the decorative sheet 21, a crack of the pattern layer, and the like.

Herein, each of the device installation jigs 31 and 41 may be modified variously.

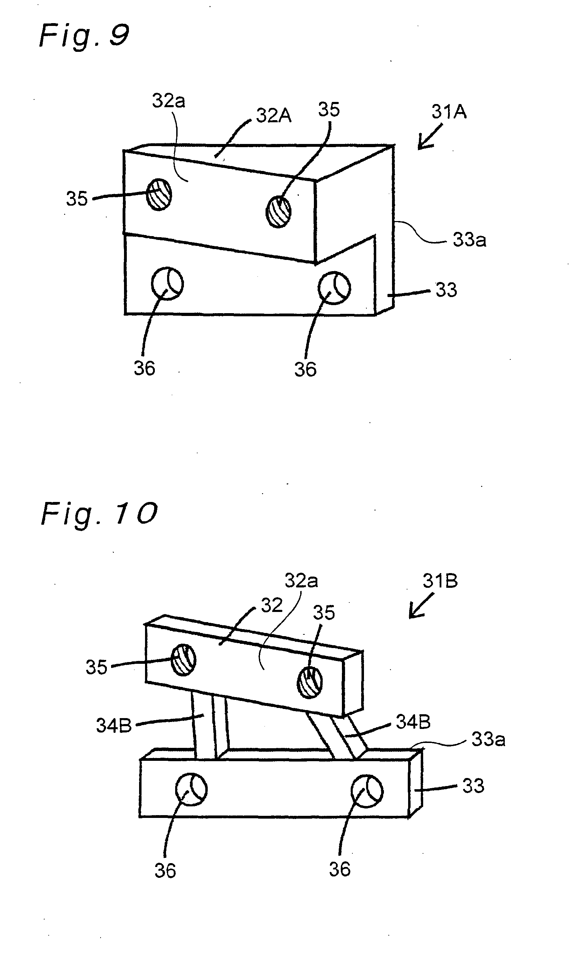

Fig. 9 is a perspective view showing a first modified example of the device installation jig. A device installation jig 31A shown in Fig. 9 has a first fixing part 32A formed into a block shape, and the first fixing part 32 serves as the supporting part 34. This configuration eliminates the necessity of the supporting part 34.

Fig. 10 is a perspective view showing a second modified example of the device installation jig. A device installation jig 31B shown in Fig. 10 has a supporting part 34B which is not formed into a plate shape, but is formed into a rod shape, and the supporting part 34B fixedly supports a first fixing part 32 and a second fixing part 33.

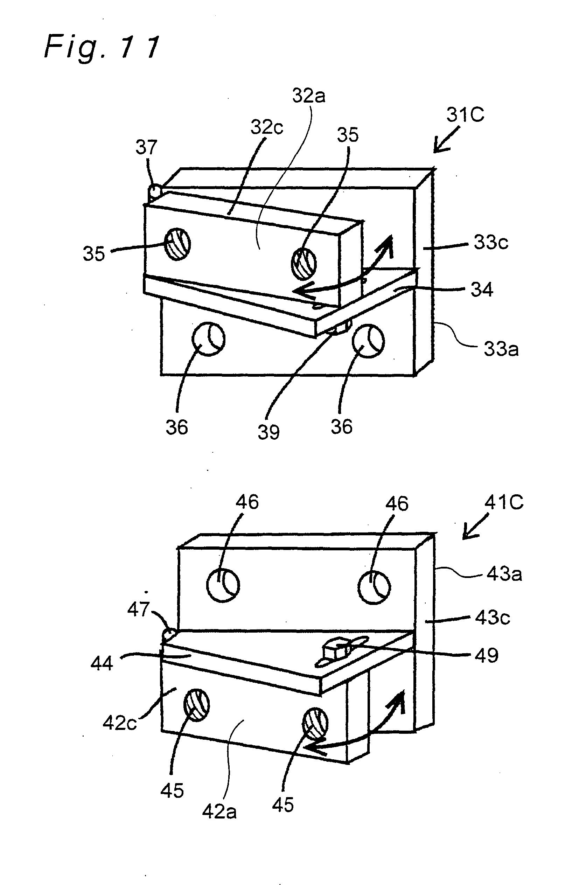

Fig. 11 is a perspective view showing a third modified example of the device installation jig. As shown in Fig. 11, a device installation jig 31C includes a hinge 37 which is one example of an angle adjustment mechanism capable of adjusting an angle formed by a first attaching surface 32a of a first fixing part 32C and a second attaching surface 33a of a second fixing part 33C. On the other hand, a device installation jig 41C includes a hinge 47 which is one example of an angle adjustment mechanism capable of adjusting an angle formed by a first attaching surface 42a of a first fixing part 42C and a second attaching surface 43a of a second fixing part 43C. Further, the device installation jig 31C includes a fixing screw 39 serving as a fixing means for fixing a positional relation between the first fixing part 32C and the second fixing part 33C. On the other hand, the device installation jig 41C includes a fixing screw 49 serving as a fixing means for fixing a positional relation between the first fixing part 42C and the second fixing part 43C. The fixing screw 39 is screwed into the first fixing part 32C through a through hole formed on a supporting part 34 to fix an angle formed by the first attaching surface 32a and the second attaching surface 33a. Moreover, the fixing screw 49 is screwed into the first fixing part 42C through a through hole formed on a supporting part 44 to fix an angle formed by the first attaching surface 42a and the second attaching surface 43a. As described above, by virtue of the angle adjustment mechanisms of the device installation jigs 31C and 41C, the decorative sheet 21 can be made parallel with a parting surface 27 even in a case where an angle of tilt of the parting surface 27 varies depending on a type of a mold assembly 81 to be used herein. Accordingly, the use of the set of device installation jigs 31C and 41C can deal with various types of mold assemblies, which is economically advantageous.

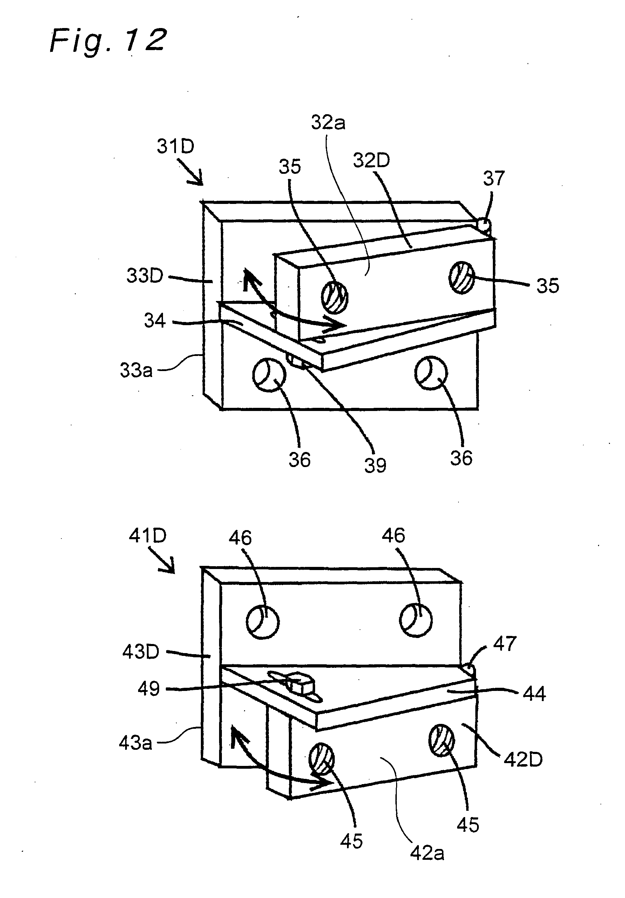

Fig. 12 is a perspective view showing a fourth modified example of the device installation jig. A device installation jig 31D shown in Fig. 12 is equal in configuration to the device installation jig 41C shown in Fig. 11. On the other hand, a device installation jig 41D shown in Fig. 12 is equal in configuration to the device installation jig 31C shown in Fig. 11. That is, the device installation jig 31C is used for securing the decorative sheet feed unit 1A, and the device installation jig 41C is used for securing the decorative sheet take-up unit 11A. Thus, the set of device installation jigs can be used under various conditions concerning an angle of tilt of the parting surface 27 even in a case where the angle of tilt varies depending on a type of a mold assembly 81 to be used herein.

Herein, each of the device installation jigs 31 to 31D and 41 to 41D is attached to the movable platen 24. Alternatively, the device installation jig may be attached to the mold assembly (movable mold 22 or fixed mold 51).

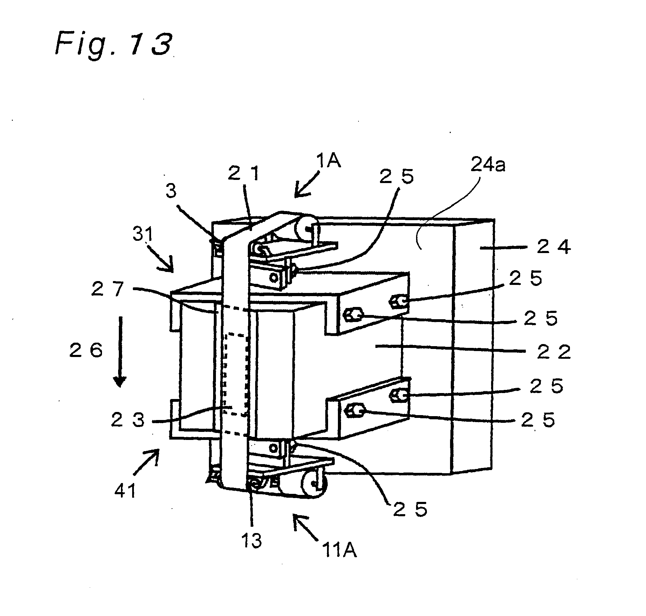

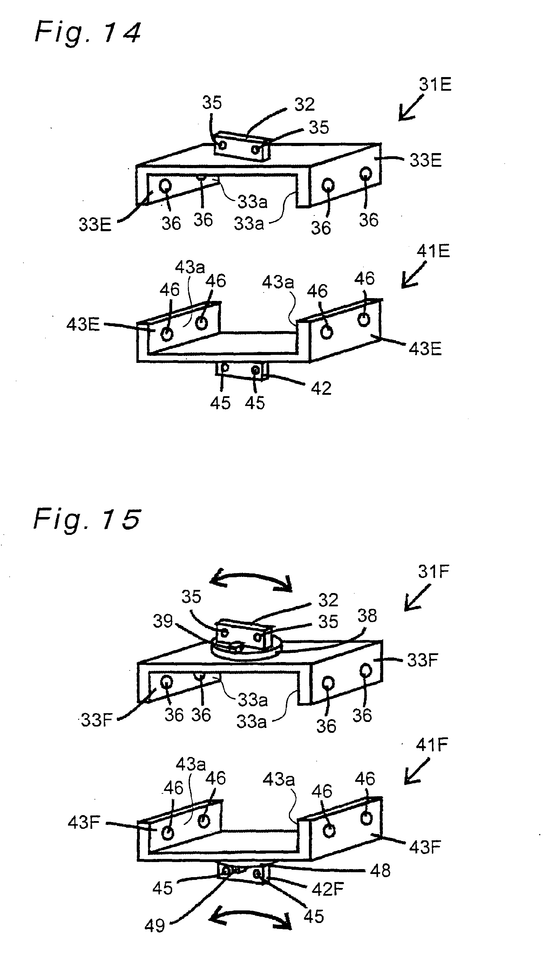

Fig. 13 is a perspective view showing a state that a device installation jig which is a fifth modified example is attached to the decorative sheet supply device and the mold assembly. Fig. 14 is a perspective view showing the device installation jig shown in Fig. 13. As shown in Figs. 13 and 14, a device installation jig 31E has a second fixing part 33E which is formed into a "U" shape when being viewed in a section, and the second fixing part 33E holds the two ends of the movable mold 22. On the other hand, a device installation jig 41E has a second fixing part 43E which is formed into a "U" shape when being viewed in a section, and the second fixing part 43E holds the two ends of the movable mold 22. With this configuration, each of the device installation jigs 31E and 41E can be firmly secured to the movable mold 22.

Fig. 15 is a perspective view showing a sixth modified example of the device installation jig. Device installation jigs 31F and 41F shown Fig. 15 are different from the device installation jigs 31E and 41E shown in Fig. 14 in the following point. That is, the device installation jig 31F includes a turn table 38 which is one example of an angle adjustment mechanism capable of adjusting an angle formed by a first attaching surface 32a of a first fixing part 32F and a second attaching surface 33a of a second fixing part 33F. On the other hand, the device installation jig 41F includes a turn table 48 which is one example of an angle adjustment mechanism capable of adjusting an angle formed by a first attaching surface 42a of a first fixing part 42F and a second attaching surface 43a of a second fixing part 43F. Herein, the first fixing part 32F is secured to the turn table 38 in the device installation jig 31F, and the first fixing part 42F is secured to the turn table 48 in the device installation jig 41F. In order to fix the angle formed by the first attaching surface 32a and the second attaching surface 33a, for example, a fixing screw 39 is screwed into a hole formed on the second fixing part 33E through a through hole formed on the turn table 38. In order to fix the angle formed by the first attaching surface 42a and the second attaching surface 43a, for example, a fixing screw 49 is screwed into a hole formed on the second fixing part 43F through a through hole formed on the turn table 48.

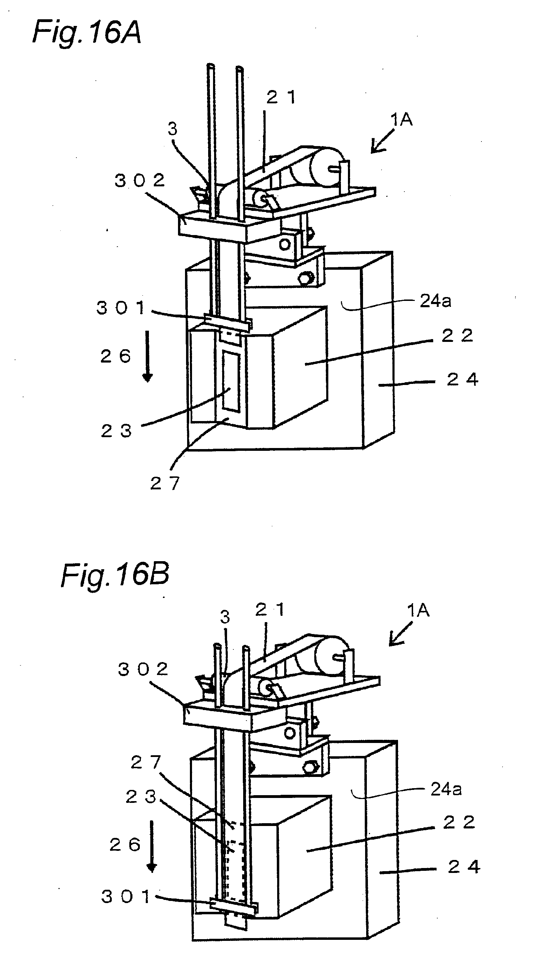

In the fourth embodiment, the in-mold decorating apparatus includes the decorative sheet take-up unit 11A and the device installation jig 41; however, the present invention is not limited to this configuration. As shown in Figs. 16A and 16B, for example, the pinch unit 301 and the drive unit 302 each described in the third embodiment may be provided in place of the decorative sheet take-up unit 11A and the device installation jig 41.

### «Fifth Embodiment»

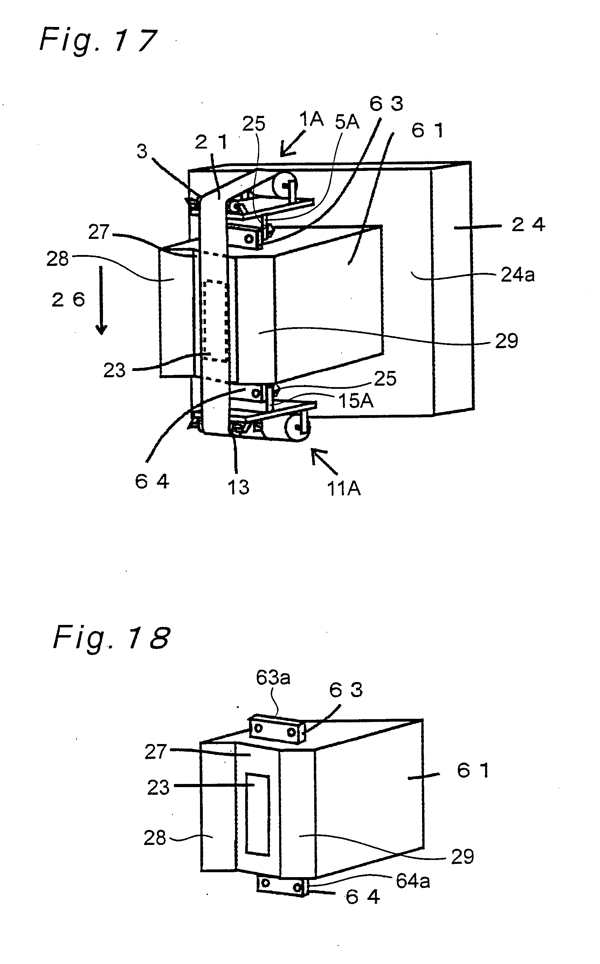

With reference to Figs. 16 and 17, next, description will be given of an in-mold decorating apparatus according to a fifth embodiment of the present invention. Fig. 16 is a perspective view showing a state that a decorative sheet supply device is attached to a mold assembly in the fifth embodiment of the present invention. The in-mold decorating apparatus according to the fifth embodiment is different from the in-mold decorating apparatus according to the fourth embodiment in the following point. That is, a movable mold 61 is provided in place of the device installation jig 31, the device installation jig 41, and the movable mold 22. The in-mold decorating apparatus according to the fifth embodiment is similar to that according to the fourth embodiment except the point described above. Therefore, the repetitive description thereof will not be given here, but description will be mainly given of the point of difference.

In the fifth embodiment, the movable mold 61 includes a fixing part 63 for fixedly supporting a decorative sheet feed unit 1A, and a fixing part 64 for fixedly supporting a decorative sheet take-up unit 11A. The fixing part 63 has a tilt surface 63a which is tilted relative to a platen surface 24a so as to be parallel with a parting surface 27. The fixing part 64 has a tilt surface 64a which is tilted relative to the platen surface 24a so as to be parallel with the parting surface 27. Accordingly, the fixing parts 63 and 64 are secured by bolts 25 or the like in a state that the tilt surface 63a of the fixing part 63 comes into surface contact with a fixing part 5A of the decorative sheet feed unit 1A and the tilt surface 64a of the fixing part 64 comes into surface contact with a fixing part 15A of the decorative sheet take-up unit 11A. Thus, the parting surface 27 can be made parallel with a decorative sheet 21.

According to the fifth embodiment, as described above, the movable mold 61 has the tilt surfaces 63a and 64a each of which is tilted relative to the platen surface 24a so as to be parallel with the parting surface 27. Therefore, the parting surface 27 can be made parallel with the decorative sheet 21 although the decorative sheet feed unit 1A and the decorative sheet take-up unit 11A are equal in configuration to a conventional decorative sheet feed unit and a conventional decorative sheet take-up unit.

It is to be noted that the present invention is not limited to the foregoing embodiments and may be embodied in various manners. In the fifth embodiment, for example, the movable mold 61 includes the fixing parts 63 and 64. Of course, a fixed mold may include the fixing parts 63 and 64.

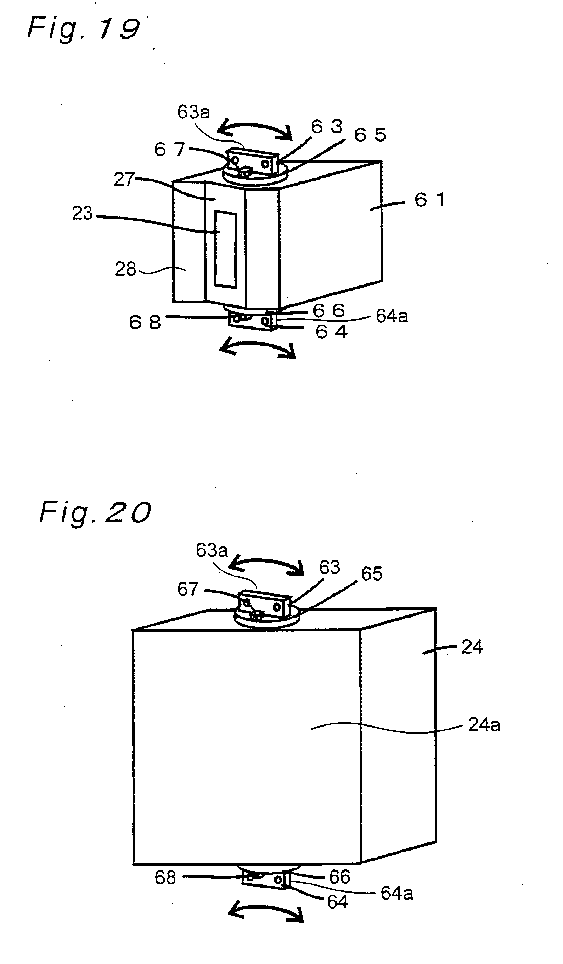

As shown in Fig. 19, moreover, the movable mold 61 may include a turn table 65 which is one example of an angle adjustment mechanism capable of adjusting an angle of tilt of the tilt surface 63a, and a turn table 66 which is one example of an angle adjustment mechanism capable of adjusting an angle of tilt of the tilt surface 64a. In such a case, preferably, the fixing part 63 is secured to the turn table 65 and a rotation shaft of the turn table 65 is attached to a main body of the movable mold. On the other hand, the fixing part 64 is secured to the turn table 66 and a rotation shaft of the turn table 66 is attached to the main body of the movable mold. In order to fix the angle of tilt of the tilt surface 63a, for example, a fixing screw 67 is screwed into a hole formed on the movable mold 61 through a through hole formed on the turn table 65. In order to fix the angle of tilt of the tilt surface 64a, moreover, a fixing screw 68 is screwed into a hole formed on the movable mold 61 through a through hole formed on the turn table 66.

In the fifth embodiment, the movable mold 61 includes the fixing parts 63 and 64; however, the present invention is not limited to this configuration. For example, a movable platen 24 (or fixed platen 53) may include the fixing parts 63 and 64. As shown in Fig. 20, moreover, the movable mold 61 may include angle adjustment mechanisms similar to those shown in Fig. 19.

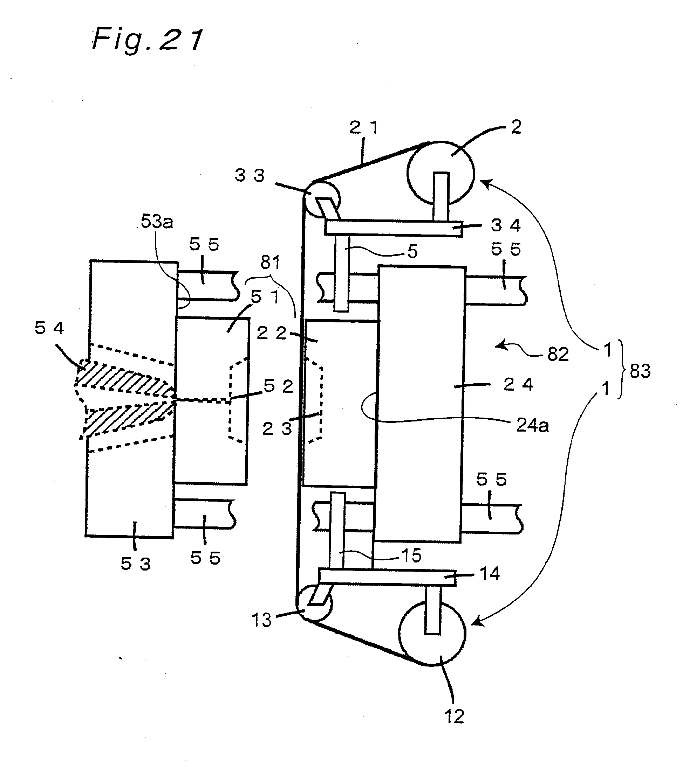

In the first embodiment, the fixing part 5 of the decorative sheet feed unit 1 and the fixing part 15 of the decorative sheet take-up unit 11 are secured to the movable platen 24; however, the present invention is not limited to this configuration. As shown in Fig. 21, for example, the fixing parts 5 and 15 may be attached to the tie bars 55, respectively.

By properly combining the arbitrary embodiments of the aforementioned various embodiments, the effects possessed by the embodiments can be produced.

### INDUSTRIAL APPLICABILITY

The in-mold decorating apparatus according to the present invention can prevent the decorative sheet from being ripped or wrinkled and the pattern layer from being cracked in the mold assembly parting surface tilted state. Therefore, this apparatus is useful as an apparatus for obtaining a resin molded product having a surface which can not be directly decorated by a printing method due to a shape thereof, for example, a resin molded product such as a vehicle bumper having a tilted top surface portion and, simultaneously, decorating the surface of such a resin molded product.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

The entire disclosure of Japanese Patent Application No. 2007-253895 and 2007-253896filed on September, 28, 2007, including specification, claims, drawings, and summary are incorporated herein by reference in its entirety.

## Claims

1. An in-mold decorating apparatus for obtaining a resin molded product and, simultaneously, bonding a decorative sheet to a surface of the resin molded product to decorate the surface of the resin molded product,
the in-mold decorating apparatus comprising:
a mold assembly that includes a movable mold having a first cavity formation surface on which a first cavity is formed, and a fixed mold having a second cavity formation surface on which a second cavity is formed;
a decorative sheet supply device for guiding the decorative sheet in a decorative sheet supplying direction to supply the decorative sheet to between the movable mold and the fixed mold; and
an injection molding machine that includes a movable platen for supporting the movable mold at a first platen surface and a fixed platen for supporting the fixed mold at a second platen surface which faces the first platen surface to be parallel with the first platen surface, wherein the injection molding machine shifts the movable platen toward the fixed platen in a state that the decorative sheet is supplied to between the movable mold and the fixed mold, so that the decorative sheet is placed on the first or second cavity, the injection molding machine closes the movable mold and the fixed mold, and then injects molten resin into a cavity space formed by the first and second cavities to obtain the resin molded product,
wherein the first and second cavity formation surfaces are tilted relative to the first or second platen surface in a direction parallel with the decorative sheet supplying direction,
wherein the decorative sheet supply device comprises:
a decorative sheet feed roll having a rotation shaft around which the decorative sheet is wound; and
a guide roller for guiding the decorative sheet fed by rotation of the decorative sheet feed roll in the decorative sheet supplying direction, wherein the guide roller has a rotation shaft arranged in parallel with the rotation shaft of the decorative sheet feed roll, and
wherein the rotation shaft of the guide roller is tilted relative to the first platen surface at an angle parallel with the first cavity formation surface.

2. The in-mold decorating apparatus according to claim 1,
wherein the decorative sheet supply device further comprises:
a frame for rotatably supporting the decorative sheet feed roll and the guide roller; and
a plate-like fixing part that is attached to the frame to intersect the rotation shaft of the decorative sheet feed roll in a direction parallel with the decorative sheet supplying direction, and
wherein the decorative sheet supply device is attached to the injection molding machine or the mold assembly through the fixing part.

3. The in-mold decorating apparatus according to claim 2, wherein the decorative sheet supply device includes an angle adjustment mechanism for adjusting an angle of tilt of the rotation shaft of the guide roller relative to the first platen surface or the second platen.

4. A decorative sheet supply device for use in the in-mold decorating apparatus according to claim 2 or 3.

5. The in-mold decorating apparatus according to claim 1,
wherein the decorative sheet supply device further includes:
a frame for rotatably supporting the decorative sheet feed roll and the guide roller; and
a fixing part that is attached to the frame, and
wherein the decorative sheet supply device is attached to the injection molding machine through the fixing part.

6. The in-mold decorating apparatus according to claim 5,
wherein the fixing part is a plate-like member attached to the frame to intersect the rotation shaft of the guide roller in a direction parallel with the decorative sheet supplying direction, and
wherein the fixing part is attached to the frame to come into surface contact with the first or second platen surface of the injection molding machine.

7. The in-mold decorating apparatus according to claim 5,
wherein the injection molding machine includes a tie bar that extends from the fixed platen to slidably penetrate through the movable platen, and is a device for shifting the movable platen toward the fixed platen along the tie bar, and
wherein the fixing part of the decorative sheet supply device is attached to the tie bar.

8. The in-mold decorating apparatus according to claim 5,
wherein the fixing part is a plate-like member attached to the frame to be parallel with the rotation shaft of the guide roller in the direction parallel with the decorative sheet supplying direction,
wherein the movable platen or the fixed platen in the injection molding machine has a tilt surface tilted relative to the first platen surface to be parallel with the first cavity formation surface, and
wherein the decorative sheet supply device is attached to the injection molding machine through the fixing part which comes into surface contact with the tilt surface.

9. The in-mold decorating apparatus according to claim 8, wherein the injection molding machine includes an angle adjustment mechanism for adjusting an angle of tilt of the tilt surface relative to the first or second platen surface.

10. An injection molding machine for use in the in-mold decorating apparatus according to claim 8 or 9.

11. The in-mold decorating apparatus according to claim 1,
wherein the decorative sheet supply device further includes:
a frame for rotatably supporting the decorative sheet feed roll and the guide roller; and
a fixing part that is attached to the frame, and
wherein the decorative sheet supply device is attached to the mold assembly through the fixing part.

12. The in-mold decorating apparatus according to claim 11,
wherein the fixing part is a plate-like member attached to the frame to be parallel with the rotation shaft of the decorative sheet feed roll and the rotation shaft of the guide roller,
wherein the movable mold or the fixed mold in the mold assembly has a tilt surface tilted relative to the first or second platen surface to be parallel with the first and second cavity formation surfaces, and
wherein the decorative sheet supply device is attached to the mold assembly through the fixing part which comes into surface contact with the tilt surface.

13. The in-mold decorating apparatus according to claim 12, wherein the mold assembly includes an angle adjustment mechanism for adjusting an angle of tilt of the tilt surface relative to the first platen surface.

14. A mold assembly for use in the in-mold decorating apparatus according to claim 12 or 13.

15. The in-mold decorating apparatus according to claim 1,
wherein the in-mold decorating apparatus further comprising a device installation jig that is used for attaching the decorative sheet supply device to the injection molding machine or the mold assembly,
wherein the decorative sheet supply device further includes:
a frame for rotatably supporting the decorative sheet feed roll and the guide roller; and
a plate-like fixing part that is attached to the frame to be parallel with the rotation shaft of the guide roller in the direction parallel with the decorative sheet supplying direction,
wherein the device installation jig has:
a first attaching surface that comes into surface contact with the fixing part to attach the device installation jig to the fixing part; and
a second attaching surface that comes into surface contact with the injection molding machine or the mold assembly to attach the device installation jig to the injection molding machine or the mold assembly, and
wherein an angle formed by the first attaching surface and the second attaching surface is equal to an angle of tilt of the first cavity formation surface relative to the first platen surface.

16. The in-mold decorating apparatus according to claim 15, wherein the device installation jig further includes an angle adjustment mechanism for adjusting the angle formed by the first attaching surface and the second attaching surface.

17. A device installation jig for use in the in-mold decorating apparatus according to claim 15 or 16.

18. An in-mold decorated molded product manufacturing method for obtaining a resin molded product and, simultaneously, bonding a decorative sheet to a surface of the resin molded product to decorate the surface of the resin molded product, the method comprising:
guiding the decorative sheet in a decorative sheet supplying direction to supply the decorative sheet to between a movable mold supported at a first platen surface of a movable platen and a fixed mold supported at a second platen surface of a fixed platen, the second platen surface facing the first platen surface to be parallel with the first platen surface;
closing the movable mold and the fixed mold in a state that the decorative sheet is supplied to between the movable mold and the fixed mold; and
injecting molten resin into a cavity space formed by a first cavity of the movable mold and a second cavity of the fixed mold,
the method comprising:
with the movable mold having a first cavity formation surface on which the first cavity is formed, the fixed mold having a second cavity formation surface on which the second cavity is formed, and the first and second cavity formation surfaces being tilted relative to the first or second platen surface in a direction parallel with the decorative sheet supplying direction,
supplying the decorative sheet between the movable mold and the fixed mold to be substantially parallel with the first cavity formation surface.
